# EUROPEAN PATENT APPLICATION

(11) **EP 4 715 912 A1**
(43) Date of publication of application: **25.03.2026**
(21) Application number: 25194829.5
(22) Date of filing: 08.08.2025
(51) Int. Cl.: H01M 8/0263, C25B 9/65

(54) **SEPARATOR, ELECTROCHEMICAL CELL, STACK, AND APPARATUS**

(30) Priority: 19.09.2024 JP 2024162499
(71) Applicant: Toshiba Elevator Kabushiki Kaisha, Kanagawa 212-0013 (JP)
(72) Inventor: HONGO, Takuya, Kawasaki-shi, Kanagawa (JP); HIRAOKA, Toshiro, Kawasaki-shi, Kanagawa (JP); HOSONO, Yasuharu, Kawasaki-shi, Kanagawa (JP); KITAGAWA, Ryota, Kawasaki-shi, Kanagawa (JP); KOFUJI, Yusuke, Kawasaki-shi, Kanagawa (JP)
(74) Representative: Hoffmann Eitle

(57) **Abstract**

A separator according to an embodiment includes a first flow channel comprising flow-channel grooves and connecting a first location and a second location. The first flow channel has a serpentine flow channel shape. The midpoint in a length direction of the first flow channel is defined as the boundary. A range from the boundary to the first location side is defined as the first half. A range from the boundary to the second location side is defined as the second half. A turnaround area is included in the first half of the first flow channel. A turnaround area is included in the second half of the first flow channel that has a flow channel pattern different from that in the first half of the first flow channel.

## Description

### FIELD

Embodiments described herein relate generally to a separator, an electrochemical cell, a stack, and an apparatus.

### BACKGROUND

In recent years, there has been growing anticipation for renewable energy. Examples of renewable energy include solar power generation, hydroelectric power generation, wind power generation, and geothermal power generation.

### BRIEF DESCRIPTION OF THE DRAWINGS

FIG. 1 is a schematic diagram of a separator according to an embodiment;
FIG. 2 is a schematic cross-sectional diagram of a separator according to an embodiment;
FIG. 3 is a schematic diagram of a separator according to an embodiment;
FIG. 4 is a schematic diagram of a separator according to an embodiment;
FIG. 5 is a schematic diagram of a separator according to an embodiment;
FIG. 6 is a schematic diagram of a separator according to an embodiment;
FIG. 7 is a schematic diagram of a separator according to an embodiment;
FIG. 8 is a schematic diagram of a separator according to an embodiment;
FIG. 9 is a schematic diagram of a separator according to an embodiment;
FIG. 10 is a schematic diagram of a separator according to an embodiment;
FIG. 11 is a schematic diagram of a separator according to an embodiment;
FIG. 12 is a schematic diagram of a separator according to an embodiment;
FIG. 13 is a schematic diagram of a separator according to an embodiment;
FIG. 14 is a schematic diagram of a separator according to an embodiment;
FIG. 15 is a schematic diagram of an electrochemical cell according to an embodiment;
FIG. 16 is a schematic diagram of an electrochemical cell according to an embodiment;
FIG. 17 is a schematic diagram of a stack according to an embodiment;
FIG. 18 is a schematic diagram of an apparatus according to an embodiment; and
FIG. 19 is a schematic diagram of an apparatus according to an embodiment.

### DETAILED DESCRIPTION

A separator according to an embodiment includes a first flow channel comprising flow-channel grooves and connecting a first location and a second location. The first flow channel has a serpentine flow channel shape. The midpoint in a length direction of the first flow channel is defined as the boundary. A range from the boundary to the first location side is defined as the first half. A range from the boundary to the second location side is defined as the second half. A turnaround area is included in the first half of the first flow channel. A turnaround area is included in the second half of the first flow channel that has a flow channel pattern different from that in the first half of the first flow channel.

Hereinafter, the embodiments will be described with reference to the drawings. It is to be noted that the same reference numerals are given to common components throughout the embodiments, and redundant explanations are omitted.

In the specification, values at 25 [°C] and 1 atm (atmosphere) are shown. Each thickness of the members represents an average of distance in a stacking direction.

The thickness and structure of members described in the specification can be known, for example, from one or more of images obtained by SEM (Scanning Electron Microscope), TEM (Transmission Electron Microscope), HAADF-STEM: High-Angle Annular Dark Field Scanning Transmission Electron Microscopy), and the like. The boundaries of the members described in the specification can be determined from one or more images obtained by scanning electron microscopy or transmission electron microscopy, SEM-EDS (Scanning Electron Microscopy with Energy Dispersive X-ray Spectroscopy) or TEM-EDX (Transmission Electron Microscopy with Energy Dispersive X-ray Spectroscopy), SIMS (Secondary Ion Mass Spectrometry), and the like. The composition of the members described in the specification can be determined by one SIMS, ICP-MS (Inductively Coupled Plasma Mass Spectrometry), SEM-EDX, TEM-EDX, or the like. The crystallinity of the members described in the specification can be evaluated, for example, from XRD (X-ray Diffraction), EBSD (Electron Backscatter Diffraction), images obtained by HAADF-STEM, SEM, TEM or the like. Materials contained in the members described in the specification (crystal defects, bonding states, etc.) can be evaluated from HAADF-STEP, PL (Photoluminescence), XPS (X-ray Photoelectron Spectroscopy), or the like. These analysis methods are examples and do not negate the specific analytical methods described in the specification.

### (FIRST EMBODIMENT)

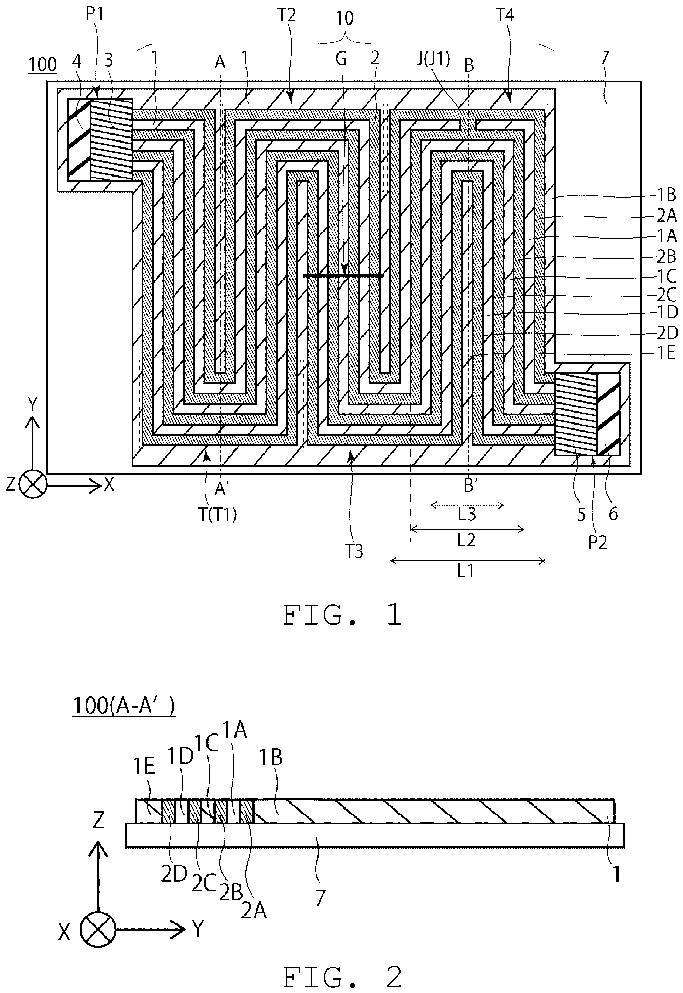

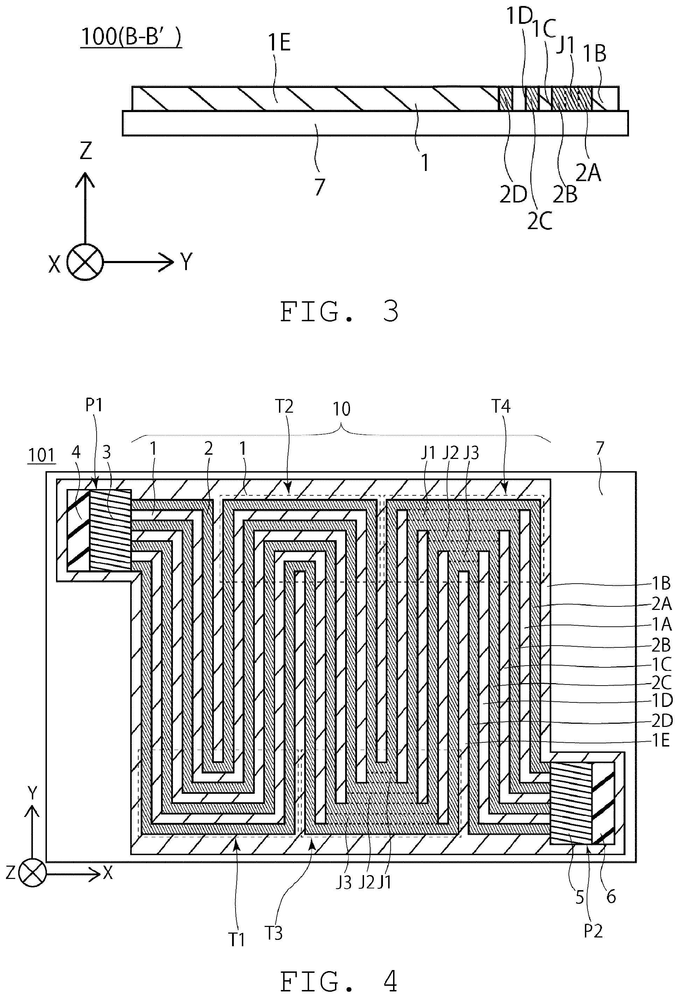

A first embodiment relates to a separator 100. FIG. 1 shows a schematic diagram of the separator 100. FIG. 2 shows a schematic cross-sectional diagram of FIG. 1 along line A-A'. FIG. 3 shows a schematic cross-sectional diagram of FIG. 1 along line B-B'. The separator 100 includes: a first flow channel 10; a supply manifold 4; an exhaust manifold 6; a supply connection channel 3; and an exhaust connection channel 5. The first flow channel 10, the supply manifold 4, the exhaust manifold 6, the supply connection channel 3, and the exhaust connection channel 5 are provided in a frame (base member) 7 of the separator 100. The directions in the figures are represented by X, Y, and Z.

The separator 100 of the first embodiment can be used, for example, in electrochemical cells for fuel cells or electrolysis. The separator 100 supplies a fluid that is used for electrode reactions and discharges a fluid containing products of electrode reactions. The fluid can be gas and/or liquid. When the fluid discharged from the exhaust manifold 6 contains both gas and liquid, the pressure loss of the separator 100 can be effectively reduced.

The separator 100 includes the first flow channel 10 including flow-channel grooves 2 provided between flow-channel walls 1. The flow-channel walls 1 may surround the supply manifold 4, the exhaust manifold 6, the supply connection channel 3 and the exhaust connection channel 3.

A flow-channel groove 2 is an area sandwiched by the flow-channel walls 1. For example, the flow-channel walls 1 may be lower level portions (recess portions) of a metal member provided on the frame 7, or the flow-channel grooves 2 may be higher level portions (protrusion portions) of a metal member provided on the frame 7. The first flow channel 10 allows fluid to flow. The first flow channel 10 preferably has the multiple flow-channel grooves 2, and it is preferable for the fluid to flow through the flow-channel grooves 2. To allow the fluid to flow with less uneven distribution across the entire porous layer of the electrode that contacts the separator 100, the first flow channel 10 preferably has a serpentine flow channel shape, for example, as shown in the schematic diagram of FIG. 1, where straight areas and turnaround areas are alternately repeated.

The first flow channel 10 having a serpentine flow channel shape includes straight areas and turnaround areas T connecting the straight areas. In the turnaround areas T, the flow channel is bent or curved so that the fluid flowing in the straight area flows in the opposite direction.

The turnaround area T is a portion where the flow direction of the fluid is changed by 180° (or approximately 180°). The first flow channel 10 in FIG. 1 includes four turnaround areas. The first flow channel 10 in FIG. 1 includes a first turnaround area T1, a second turnaround area T2, a third turnaround area T3, and a fourth turnaround area T4.

At the connection portion between the first flow channel 10 and the supply connection channel 3, a portion where the flow-channel groove 2 bends at 90° is not included in the turnaround area because it is possible to connect the first flow channel 10 and the supply connection channel 3 without bending the flow-channel groove 2.

Similarly, at the connection portion between the first flow channel 10 and the exhaust connection channel 3, a portion where the flow-channel groove 2 bends at 90° is not included in the turnaround portion because it is possible to connect the first flow channel 10 and the exhaust connection channel 3 without bending the flow-channel groove 2.

For example, if the number of the turnaround areas T is odd, the boundary between the first and second halves of the flow-channel groove 2 may exist within a turnaround area. In this case, one turnaround area includes both the first and second halves of the flow-channel groove 2.

The flow-channel walls 1 are composed of metal, for example.

The first flow channel 10 has the multiple flow-channel grooves 2. The first flow channel 10 includes a first flow-channel wall (flow-channel wall 1) 1A, a first flow-channel groove (flow-channel groove 2) 2A, a second flow-channel wall (flow-channel wall 1) 1B, a second flow-channel groove (flow-channel groove 2) 2B, a third flow-channel wall (flow-channel wall 1) 1C, a third flow-channel groove (flow-channel groove 2) 2C, a fourth flow-channel wall (flow-channel wall 1) 1D, a fourth flow-channel groove (flow-channel groove 2) 2D, and a fifth flow-channel wall (flow-channel wall 1) 1E. The numbers assigned to the flow-channel walls 1 and the flow-channel grooves 2 are for convenience only, and some may not be in numerical order. When the order of the flow-channel grooves 2 differs (for example, in the order of the first flow-channel groove 2A, the fourth flow-channel groove 2D, the third flow-channel groove 2C, and the second flow-channel groove 2B), the numbers of the flow-channel walls 1 sandwiching each flow-channel groove 2 change. In the separator 100, the flow-channel grooves 2 are numbered sequentially from a flow-channel groove 2 connected to another flow-channel groove 2. The following explanation of flow-channel grooves 2 does not limit the explanation to a specific flow-channel groove 2.

In this embodiment, four flow-channel grooves 2 are shown; however, the number of flow-channel grooves 2 is not limited to four and can be one or more. For example, separators with three, five, or eight flow-channel grooves 2 are also included in the embodiments of the separator.

The first flow-channel groove 2A is provided between the flow-channel walls. In the schematic diagram of FIG. 1, the first flow-channel groove 2A is provided between the first flow-channel wall 1A and the second flow-channel wall 1B.

The second flow-channel groove 2B is provided between the flow-channel walls. In the schematic diagram of FIG. 1, the second flow-channel groove 2B is provided between the first flow-channel wall 1A and the third flow-channel wall 1C.

The third flow-channel groove 2C is provided between the flow-channel walls. In the schematic diagram of FIG. 1, the third flow-channel groove 2C is provided between the third flow-channel wall 1C and the fourth flow-channel wall 1D.

The fourth flow-channel groove 2D is provided between the flow-channel walls. In the schematic diagram of FIG. 1, the fourth flow-channel groove 2D is provided between the fourth flow-channel wall 1D and the fifth flow-channel wall 1E.

The pitch of the flow-channel grooves 2 is preferably 0.1 [mm] or more and 5 [mm] or less, more preferably 0.3 [mm] or more and 3 [mm] or less, and still more preferably 0.5 [mm] or more and 2.5 [mm] or less.

The supply connection channel 3 is provided between the supply manifold 4 and the first flow channel 10. The supply connection channel 3 is a flow channel connecting the supply manifold 4 and the first flow channel 10. Fluid passing through the supply connection channel 3 flows through the first flow channel 10. The supply connection channel 3 may be formed as a recess and projection (higher level portion and lower level portion) on the frame 7 or may be constituted by a member separate from the frame 7. The fluid also flows in the direction where the supply connection channel 3 and the supply manifold 4 are connected.

The supply manifold 4 is an opening of the separator 100. Fluid is supplied from the supply manifold 4. Other manifolds not shown in the figure may be provided in the separator 100.

In the first embodiment, the supply connection channel 3 and the supply manifold 4 of the separator 100 are located on a first location P1 side.

The exhaust connection channel 3 is provided between the exhaust manifold 6 and the first flow channel 10. The exhaust connection channel 3 is a flow channel connecting the exhaust manifold 6 and the first flow channel 10. Fluid passing through the first flow channel 10 flows through the exhaust connection channel 3 and is discharged from the exhaust manifold 6. The exhaust connection channel 3 may be formed as a recess and projection (higher level portion and lower level portion) on the frame 7 or may be constituted by a member separate from the frame 7.

The exhaust manifold 6 is an opening of the separator 100. Fluid is discharged from the exhaust manifold 6.

In the first embodiment, the fluid flowing through the first flow channel 10 flows from the first location P1 toward a second location P2. The first flow channel 10 connects the first location P1 and the second location P2.

The exhaust connection channel 3 and the exhaust manifold 6 of the separator 100 in the first embodiment are located on the second location P2 side.

The frame 7 is preferably insulating and is constituted, for example, by a resin material.

The midpoint in the length direction of the first flow channel 10 is defined as the boundary between the first half and the second half. The boundary is represented by a dashed line G in FIG. 1. The length of the first flow channel 10 is the length of the center of the flow channel pattern of the first flow channel 10. In the case of the separator 100 shown in FIG. 1, the length of the flow channel pattern from the first location P1 side to the second location P2 side of the third flow-channel wall 1C is the length of the first flow channel 10. Since the fluid flows through the first flow channel 10 from the first location P1 to the second location P2, including fluids and products used in electrode reactions, a range from the boundary G to the first location P1 side is defined as the first half of the first flow channel 10, and a range from the boundary G to the second location P2 side is defined as the second half of the first flow channel 10.

It is preferable for the separator 100 to include a turnaround area T in the second half of the first flow channel 10 that has a flow channel pattern different from the flow channel pattern of the turnaround area T in the first half of the first flow channel 10. This can reduce the accumulation of gas contained in the fluid, including liquids and gases, flowing through the first flow channel 10, into the flow-channel grooves 2.

The A-A' cross section of FIG. 2 and B-B' cross section of FIG. 3 show cross sections of the first turnaround area T1 and the fourth turnaround area T4, respectively. In the fourth turnaround area T4, a junction groove J enclosed by a dashed line is provided, which is not present in the first turnaround area T1. As shown in the cross-sectional schematic diagrams of FIG. 2 and FIG. 3, the first flow channel 10 has different flow channel patterns in the turnaround areas T of the first half and the second half.

When gas accumulates in the flow-channel grooves 2, gases generated at the electrode in contact with the separator 100 are prone to undergo side reactions. For example, when CO₂ is electrolyzed, oxygen gas generated at the cathode and having a high concentration on the anode discharge side reacts with hydrogen gas generated by the reduction of water due to side reactions caused by the decrease in the concentration of CO₂ on the cathode discharge side, resulting in the generation of hydrogen peroxide. Since hydrogen peroxide deteriorates the electrolyte membrane, it is preferable to connect part of the flow-channel grooves 2 to prevent gas accumulation. It is not effective to connect all turnaround of the serpentine flow channel pattern or to connect the flow-channel grooves 2 of the first half of the serpentine flow channel pattern. By connecting a portion of the flow-channel grooves 2 in the second half rather than the first half of the serpentine flow channel pattern, gas accumulation can be reduced.

The flow-channel grooves 2 in the second half of the first flow channel 10 are partially connected and/or a portion of the flow-channel grooves 2 in the second half of the first flow channel 10 is blocked, while the flow-channel grooves 2 in the first half of the first flow channel 10 are not connected, and a portion of the flow-channel grooves 2 in the first half of the first flow channel 10 is not blocked. As a result, a turnaround area T having a different flow channel pattern from that of the turnaround area T in the first half of the first flow channel 10 is included in the second half of the first flow channel 10. A portion of the flow-channel grooves 2 in the second half of the first flow channel 10 are connected by the junction groove J.

In the separator 100 shown in FIG. 1, the first flow-channel groove 2A and the second flow-channel groove 2B are connected at the fourth turnaround area T4. The first flow-channel wall 1A sandwiching the first flow-channel groove 2A is partially discontinuous, and the third flow-channel wall 1C sandwiching the second flow-channel groove 2B is also partially discontinuous so that the first flow-channel groove 2A and the second flow-channel groove 2B are connected. The first flow-channel groove 2A and the second flow-channel groove 2B are connected by a first junction groove (junction groove J) J1.

It is preferable that the first junction groove J1 is provided in the second half of the first flow channel 10, and more preferably provided in a turnaround area T (the third turnaround area T3 and/or the fourth turnaround area T4) in the second half of the first flow channel 10 shown in FIG. 1.

It is preferable that a portion of the first flow-channel wall 1A sandwiching the first flow-channel groove 2A is partially discontinuous, and the length of the first flow-channel wall 1A in the second half of the first flow channel 10 is shorter than the length of the first flow-channel wall 1A in the first half of the first flow channel 10. It is preferable that first flow-channel wall 1A in the first half of the first flow channel 10 is continuous. It is preferable that the flow-channel walls 1 in the first half of the first flow channel 10 are continuous.

FIG. 1 shows a schematic diagram illustrating the lengths L1 of the first flow-channel groove 2A in the fourth turnaround area T4, L2 of the second flow-channel groove 2B in the fourth turnaround area T4, L3 of the third flow-channel groove 2C in the fourth turnaround area T4, and L4 of the fourth flow-channel groove 2D in the fourth turnaround area T4.

The length at which the first flow-channel groove 2A and the second flow-channel groove 2B are connected (the length at which the first flow-channel groove 2A and the second flow-channel groove 2B are connected in one turnaround area T) is preferably 7% or more and 100% or less of the length L1 of the first flow-channel groove 2A at the turnaround area where the first flow-channel groove 2A and the second flow-channel groove 2B are connected, more preferably 50% or more and 100% or less, and even more preferably 70% or more and 100% or less.

When the second flow-channel groove 2B and the third flow-channel groove 2C are connected, the length at which the second flow-channel groove 2B and the third flow-channel groove 2C are connected (the length at which the second flow-channel groove 2B and the third flow-channel groove 2C are connected in one turnaround area T) is preferably 9% or more and 100% or less of the length L2 of the second flow-channel groove 2B at the turnaround area where the second flow-channel groove 2B and the third flow-channel groove 2C are connected, more preferably 50% or more and 100% or less, and even more preferably 70% or more and 100% or less.

When the third flow-channel groove 2C and the fourth flow-channel groove 2D are connected, the length at which the third flow-channel groove 2C and the fourth flow-channel groove 2D are connected (the length at which the third flow-channel groove 2C and the fourth flow-channel groove 2D are connected in one turnaround area T) is preferably 14% or more and 100% or less of the length L3 of the third flow-channel groove 2C at the turnaround area where the third flow-channel groove 2C and the fourth flow-channel groove 2D are connected, more preferably 50% or more and 100% or less, and even more preferably 70% or more and 100% or less.

When a junction groove J is provided between the second flow-channel groove 2B and the third flow-channel groove 2C, the third flow-channel wall 1C provided between the second flow-channel groove 2B and the third flow-channel groove 2C is discontinuous, and a second junction groove (junction groove J) J2 provided at the portion where the third flow-channel wall 1C is discontinuous connects the second flow-channel groove 2B and the third flow-channel groove 2C.

When a junction groove J is provided between the third flow-channel groove 2C and the fourth flow-channel groove 2D, the fourth flow-channel wall 1D provided between the third flow-channel groove 2C and the fourth flow-channel groove 2D is discontinuous, and a third junction groove (junction groove J) J3 provided at the portion where the fourth flow-channel wall 1D is discontinuous connects the third flow-channel groove 2C and the fourth flow-channel groove 2D.

When the first flow channel 10 includes the flow-channel grooves 2, it is preferable that the flow-channel grooves 2 are parallel to each other. It is preferable that the junction groove J extends in a direction perpendicular to the direction in which the flow-channel grooves 2 are arranged and connects the flow-channel grooves 2. It is preferable that the junction groove J extends in a direction perpendicular to the straight area of the flow-channel groove 2 and connects the flow-channel grooves 2.

Hereinafter, the separator 100 will be illustrated with several examples to further explain the connection of the flow-channel grooves 2.

FIG. 4 shows a schematic diagram of a separator 101. The separator 101 shown in FIG. 4 is a variation example of the separator 100. The flow channel patterns in the third turnaround area T3 and the fourth turnaround area T4 of the separator 101 are different from the flow channel patterns in the first turnaround area T1 and the second turnaround area T2.

As shown in FIG. 4, the flow-channel wall 1 extending perpendicular to the extension direction Y of the straight area of the third turnaround area T3 and the fourth turnaround area T4 is discontinuous in the separator 101 shown in FIG. 4. The first flow-channel groove 2A and the second flow-channel groove 2B are connected by the first junction groove J1. The second flow-channel groove 2B and the third flow-channel groove 2C are connected by the second junction groove J2. The third flow-channel groove 2C and the fourth flow-channel groove 2D are connected by a third junction groove J3. The first junction groove J1, the second junction groove J2, and the third junction groove J3 are provided in both the third turnaround area T3 and the fourth turnaround area T4.

In the turnaround area T of the second half of the first flow channel 10, a portion of the flow-channel wall 1 is discontinuous. Additionally, a junction portion where all the flow-channel grooves 2 included in the second half of the first flow channel 10 is included in the first flow channel 10.

In the separator 101, the ease of fluid flow is changed at the turnaround area T due to the connection of the flow-channel grooves 2 in the second half of the first flow channel 10. By changing the ease of fluid flow in the first half and the second half of the first flow channel 10, it becomes difficult for gas to accumulate in the second half of the first flow channel 10.

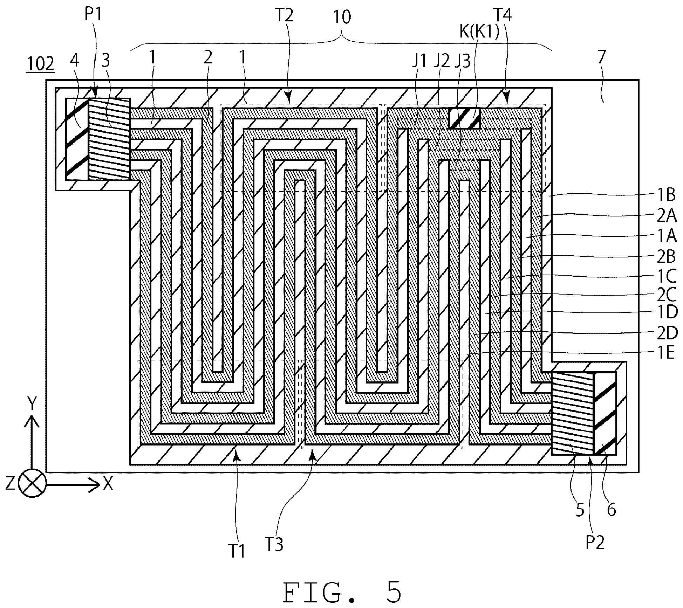

FIG. 5 shows a schematic diagram of separator 102. The separator 102 shown in FIG. 5 is a variation example of separator 101. The separator 102 has a flow channel pattern in the third turnaround area T3 in the second half of the first flow channel 10 that is the same as the flow channel patterns of the first turnaround area T1 and the second turnaround area T2 in the first half, and a first columnar wall (columnar wall K) K1 connected to the second flow-channel wall 1B is provided in the fourth turnaround area T4.

The columnar wall K is provided on the flow-channel groove(s) 2 or/and the junction groove(s) J. Preferably, the columnar wall K does not divide the region where the flow-channel grooves 2 are connected by the junction groove J. The columnar wall K also changes the flow channel pattern. It is preferable that the columnar wall K is provided in the second half of the first flow channel 10. The columnar wall K preferably has a prismatic or cylindrical shape. For example, the columnar wall K may be composed of metal and/or resin. The columnar wall K preferably has a height similar to that of the flow-channel wall 1.

In separator 102, the ease of fluid flow is changed at the turnaround area T due to the connection of the flow-channel grooves 2 in the fourth turnaround area T4 and the presence of the columnar wall K. By changing the ease of fluid flow in the first half and second half of the first flow channel 10, it becomes difficult for gas to accumulate in the latter half of the first flow channel 10.

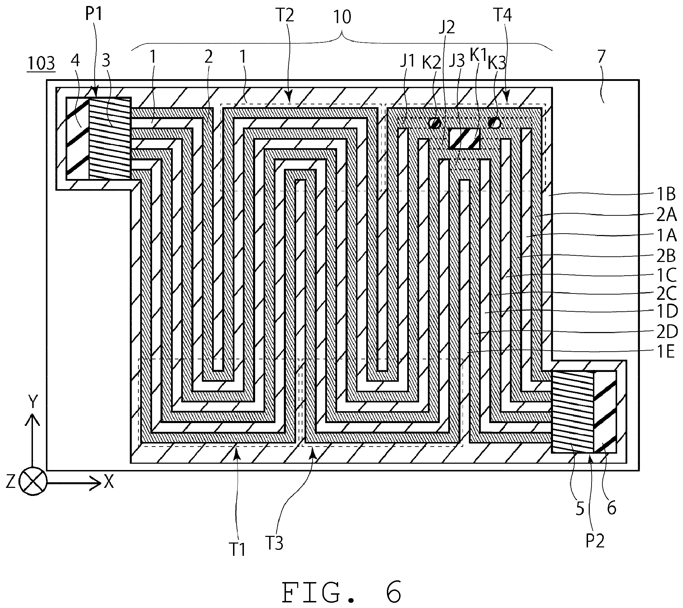

FIG. 6 shows a schematic diagram of separator 103. The separator 103 shown in FIG. 6 is a variation example of the separator 102. Separator 103 has island-shaped first columnar wall K1, a second columnar wall (columnar wall K) K2 having island-shape, and a third columnar wall (columnar wall K) K3 with island-shape provided in a region of the fourth turnaround area T4 where the flow-channel wall 1 is discontinuous and a wide flow-channel groove 2 is formed. The columnar wall K may be in contact with the flow-channel wall 1 or may not be in contact (with island shape) .

The separator 103 connects the flow-channel groove 2 in the second half of the first flow channel 10 at the fourth turnaround area T4. The presence of a columnar wall K further alters the ease of fluid flow in the turnaround area T. By changing the ease of fluid flow between the first half and the second half of the first flow channel 10, the accumulation of gas in the latter half of the first flow channel 10 is reduced.

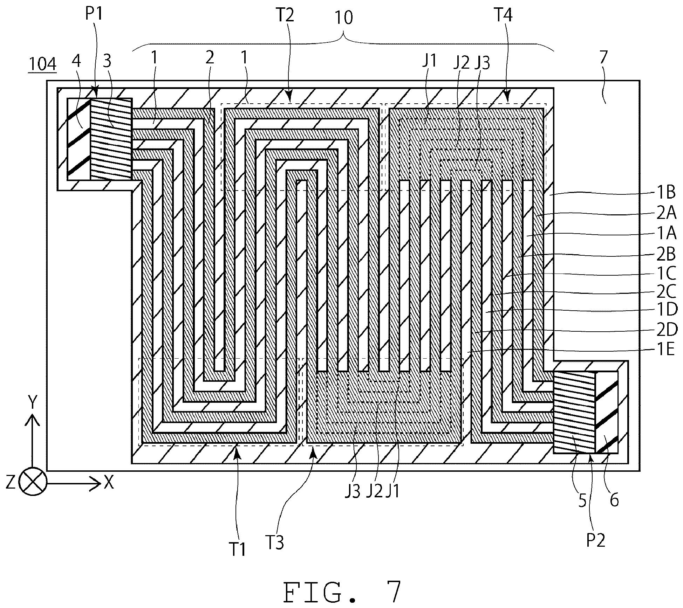

FIG. 7 shows a schematic diagram of the separator 104. The separator 104 shown in FIG. 7 is a variation example of the separator 101. In the separator 104, more extensive removal of the flow-channel walls 1 are removed at the third turnaround area T3 and the fourth turnaround area T4 compared to the separator 101. As a result, the first flow channel 10 has different flow channel patterns in the first half and second half. The U-shaped flow-channel wall 1 is removed at the third turnaround area T3 and the fourth turnaround area T4, and the first junction groove J1, the second junction groove J2, and the third junction groove J3 are provided.

In the second half of the first flow channel 10, many flow-channel walls 1 are removed. It is preferable that some flow-channel walls 1 remain in the second half of the first flow channel 10. The total length of the flow-channel walls 1 in the second half of the first flow channel 10 is preferably 20% or more and 98% or less, more preferably 29% or more and 80% or less, and even more preferably 39% or more and 61% or less compared to the total length of the flow-channel walls 1 in the first half of the first flow channel 10.

The ease of fluid flow at the turnaround area T is changed by connecting the flow-channel grooves 2 in the second half of the first flow channel 10 of the separator 104. By changing the ease of fluid flow between the first half and the second half of the first flow channel 10, the accumulation of gas in the latter half of the first flow channel 10 is reduced.

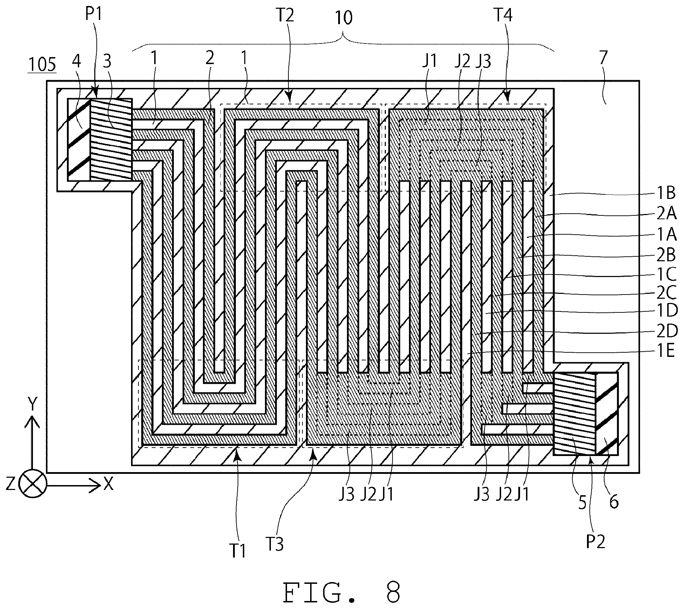

FIG. 8 shows a schematic diagram of the separator 105. The separator 105 shown in FIG. 8 is a variation example of separator 104. In the separator 105, the first flow-channel wall 1A, the third flow-channel wall 1C and the fourth flow-channel wall 1D outside the turnaround area T are discontinuous. Even when the flow-channel walls 1 are discontinuous outside of the turnaround area T, it is preferable that the flow-channel wall 1 located on the inner side of the flow-channel groove 2 at the most inside position in the turnaround area T is not discontinue. The discontinuous flow-channel wall 1 located on the inner side of the flow-channel groove 2 at the most inside position in the turnaround area T may be shorter in the second half of the first flow channel 10 than in the first half.

The ease of fluid flow at the turnaround area T is changed by connecting the flow-channel grooves 2 in the second half of the first flow channel 10 of the separator 105. By changing the ease of fluid flow between the first half and the second half of the first flow channel 10, the accumulation of gas in the latter half of the first flow channel 10 is reduced.

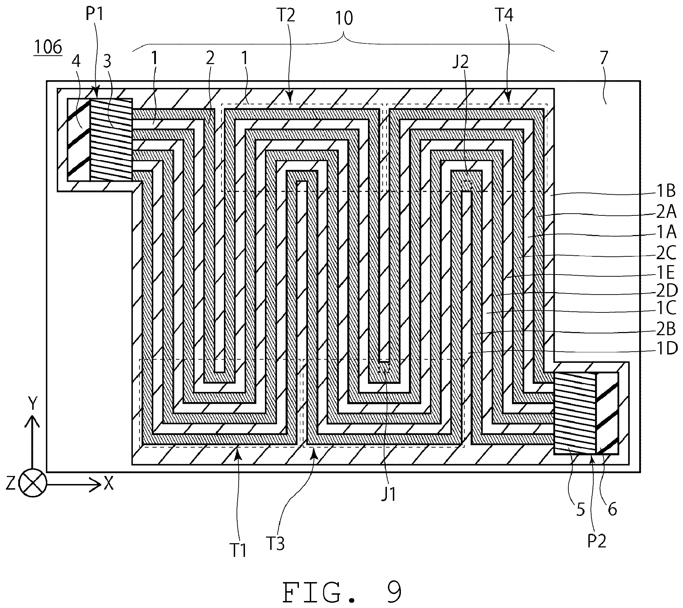

FIG. 9 shows a schematic diagram of separator 106. The separator 106 shown in FIG. 9 is a variation example of the separator 100. One side of the first flow-channel wall 1A, located between the third flow-channel wall 1C and the second flow-channel groove 2A in the third turnaround area T3, remains continuous while being partially discontinuous. The length of the first flow-channel wall 1A in the second half of the first flow channel 10 is shorter than the length of the first flow-channel wall 1A in the first half of the first flow channel 10. The first junction groove J1 is provided on the shortened portion of the first flow-channel wall 1A, and the first junction groove J1 connects to the first flow-channel groove 2A.

Similarly, one side of the third flow-channel wall 1C, located between the fourth flow-channel wall 1D and the second flow-channel groove 2B in the fourth turnaround area T4, remains continuous while not being partially discontinuous. The length of the third flow-channel wall 1C in the second half of the first flow channel 10 is shorter than the length of the third flow-channel wall 1C in the first half of the first flow channel 10. The second junction groove J2 is provided on the shortened portion of the third flow-channel wall 1C, and the second junction groove J2 connects to the second flow-channel groove 2B.

The ease of fluid flow at the turnaround area T is changed by connecting the flow-channel grooves 2 in the second half of the first flow channel 10 of the separator 106. By changing the ease of fluid flow between the first and second halves of the first flow channel 10, gas accumulation is reduced in the second half of the first flow channel 10.

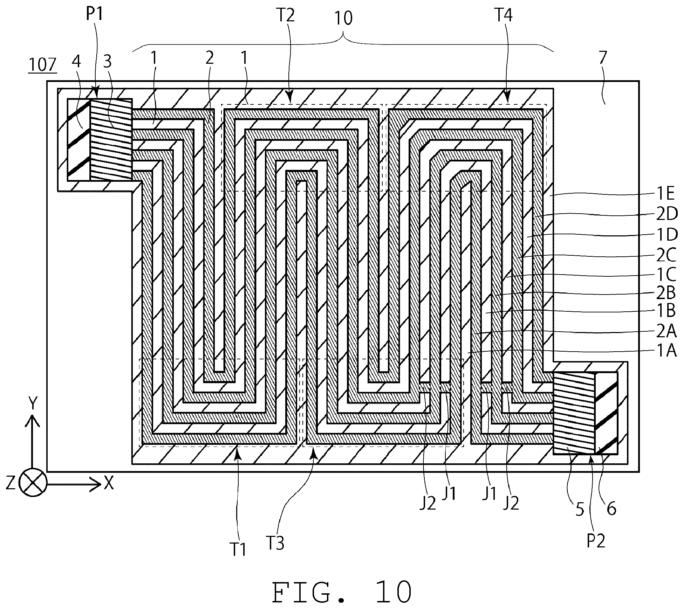

FIG. 10 shows a schematic diagram of separator 107. The separator 107 shown in FIG. 10 is a variation example of the separator 100. The flow channel pattern at the third turnaround area T3 and the fourth turnaround area T4 in separator 107 differs from those at both the first turnaround area T1 and the second turnaround area T2. The first junction groove J1, which connects the first flow-channel groove 2A and the second flow-channel groove 2B, and the second junction groove J2, which connects the second flow-channel groove 2B and the third flow-channel groove 2C are provided at the third turnaround area T3. Similarly, the first junction groove J1 and the second junction groove J2 are provided on the exhaust connection channel 3 side, not at a turnaround area in the first flow channel 10.

The corner on the side of the second turnaround area T2 in the flow-channel groove 2 at the fourth turnaround area T4 is inclined. By changing the angle of the corner of the flow-channel groove 2 without providing a junction groove J or closing off the flow-channel groove 2, the flow channel pattern in the second half of the first flow channel 10 at the fourth turnaround area T4 can be changed to the same as that in the first half of the first flow channel 10 at the first turnaround area T1. Providing a junction groove J is more effective for changing the ease of fluid flow in the second half of the first flow channel 10; therefore, providing a junction groove J is preferable.

The separator 107 is connected to the flow-channel groove 2 in the latter half of the first flow channel 10. By changing the bending angle of the flow-channel groove 2 in the turnaround area T, the ease of fluid flow changes in the turnaround area T. As the ease of fluid flow changes between the first half and the second half of the first flow channel 10, gas is less likely to accumulate in the latter half of the first flow channel 10.

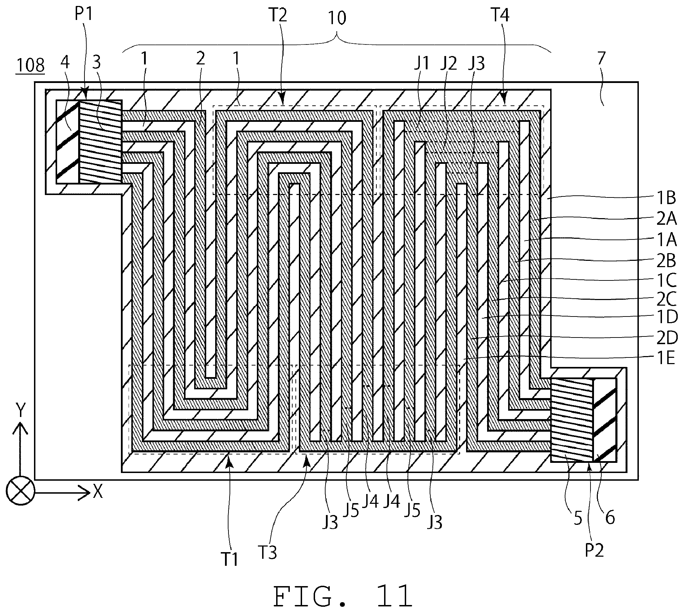

FIG. 11 shows a schematic diagram of separator 108. The separator 108 shown in FIG. 10 is a variation example of the separator 101. The first flow-channel groove 2A and the second flow-channel groove 2B at the fourth turnaround area T4 of separator 107 are connected by the first junction groove J1. The second flow-channel groove 2B and the third flow-channel groove 2C at the fourth turnaround area T4 of separator 107are connected by the second junction groove J2. The third flow-channel groove 2C and the fourth flow-channel groove 2D at the fourth turnaround area T4 of separator 107 are connected by the third junction groove J3.

The junction grooves J are also provided in the third turnaround area T3 of the separator 108. In the third turnaround area T3 of separator 107, the first flow-channel groove 2A and the fourth flow-channel groove 2D are connected by a fifth junction groove J4, the second flow-channel groove 2B and the fourth flow-channel groove 2D are connected by a sixth junction groove J5, and the third flow-channel groove 2C and the fourth flow-channel groove 2D are connected by the third junction groove J3.

The extension direction of the junction groove J in the third turnaround area T3 is different from the extension direction of the junction groove J in the fourth turnaround area T4, for example, by 90°.

The separator 108 changes the ease of fluid flow in the turnaround area T by connecting the flow-channel groove 2 in the second half of the first flow channel 10. As the ease of fluid flow changes between the first half and the second half of the first flow channel 10, gas is less likely to accumulate in the second half of the first flow channel 10.

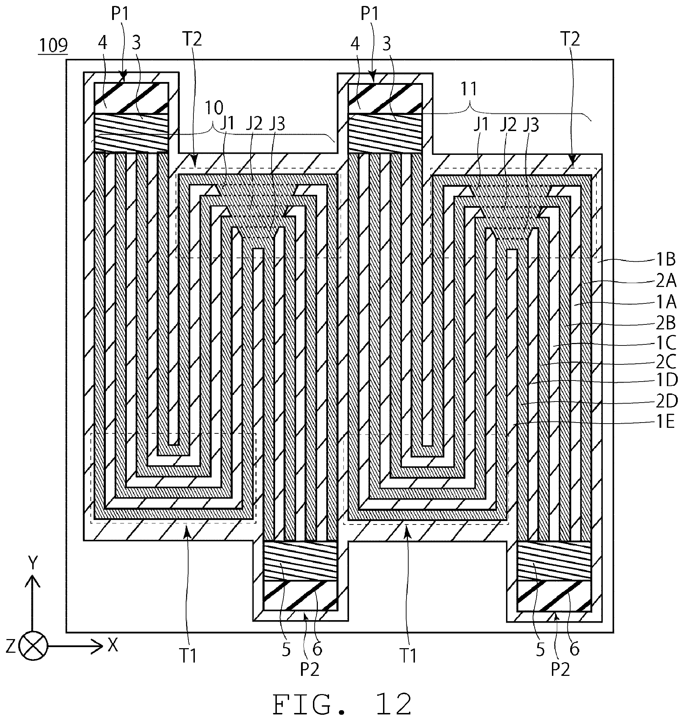

FIG. 12 shows a schematic diagram of the separator 109. The separator 109 shown in FIG. 12 is a variation example of the separator 100. The separator 109 has a configuration in which two flow channels, the first flow channel 10 and a second flow channel 11, are arranged independently and in parallel. The first flow channel 10 and the second flow channel 11 each include a first turnaround area T1 and a second turnaround area T2. The first turnaround area T1 is a turning portion included in the first half of the first flow channel 10 and the first half of the second flow channel 11, and the second turnaround area T2 is a turning portion included in the second half of the flow-channel groove 2. From the outside to the inside of the second turnaround area T2, the first flow-channel groove 2A, the second flow-channel groove 2B, the third flow-channel groove 2C and the fourth flow-channel groove 2D are provided.

The first flow-channel groove 2A and the second flow-channel groove 2B are connected by the first junction groove J1, the second flow-channel groove 2B and the third flow-channel groove 2C are connected by the second junction groove J2, and the third flow-channel groove 2C and the fourth flow-channel groove 2D are connected by the third junction groove J3. The first junction groove J1 tapers toward the fourth flow-channel groove 2D, meaning that the width of the junction groove J gradually decreases. Various shapes of the junction grooves J can be adopted in this embodiment for connecting the flow-channel grooves 2.

It is preferable that the first flow channel 10 and the second flow channel 11 have the same flow channel pattern, and each has a different flow channel pattern in the first half and the second half.

In the separator 109, the flow-channel grooves 2 are connected in the second half of the first flow channel 10 and the second half of the second flow channel 11, the ease of fluid flow at the turnaround area T changes. By changing the ease of fluid flow between the first half and the second half of the first flow channel 10 and between the first half and the second half of the second flow channel 11, gas accumulation in the second half of the first flow channel 10 and the second flow channel 11 is reduced.

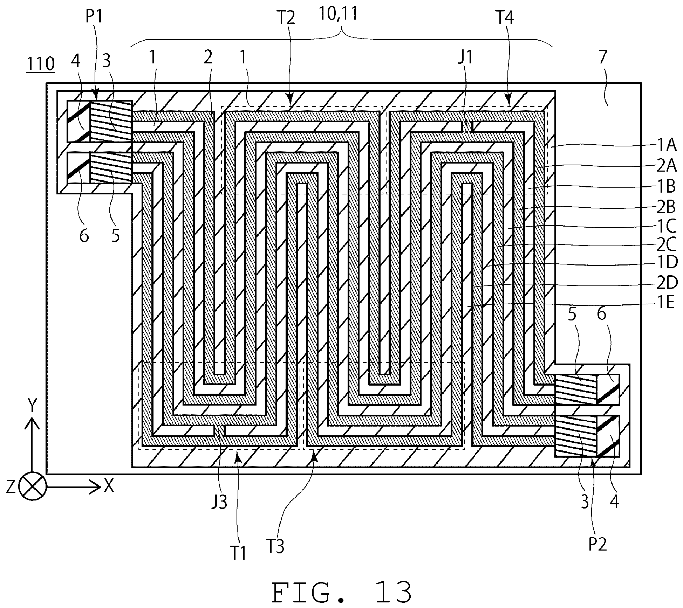

FIG. 13 shows a schematic diagram of separator 110. The separator 110 shown in FIG. 13 is a variation of separator 100. The separator 110 includes first flow-channel groove 2A and the second flow-channel groove 2B through which fluid flows from the first location P1 to the second location P2, third flow-channel groove 2C and fourth flow-channel groove 2D through which fluid flows from the second location P2 to the first location P1. The second location P2 on the supply side of the second flow channel 11 is connected to the supply connection channel 3 and the supply manifold 4. The first location P1, which is the discharge side of the second flow channel 11, is connected to the exhaust connection channel 3 and the exhaust manifold 6. That is, fluid flowing in the first flow channel 10 flows in a direction opposite to that of the fluid flowing through the second flow channel 11. The midpoint in the length direction of the second flow channel 11 is defined as the boundary between the first half and the second half. A range from the boundary to the second location P2 side is defined as the first half of the second flow channel 11, and a range from the boundary to the first location P1 side is defined as the second half of the second flow channel 11.

The first flow channel 10 includes the first flow-channel wall 1A, the second flow-channel wall 1B, the first flow-channel groove 2A provided between the first flow-channel wall 1A and the second flow-channel wall 1B, the third flow-channel wall 1C, and, the second flow-channel groove 2B. Regarding the first flow channel 10, the third flow-channel wall 1C between the first flow-channel groove 2A and the second flow-channel groove 2B is discontinuous at the fourth turnaround area T4, and the first flow-channel groove 2A and the second flow-channel groove 2B are connected by the first junction groove J1. The flow channel pattern of the third turnaround area T3 and/or the fourth turnaround area T4, which is the turnaround area T in the second half of the first flow channel 10, is different from the flow channel pattern of the first turnaround area T1 and the second turnaround area T2, which are the turnaround areas T in the first half of the first flow channel 10.

The second flow channel 11 includes the third flow-channel wall 1C, the fourth flow-channel 1D, the third flow-channel groove 2C provided between the third flow-channel wall 1C and the fourth flow-channel wall 1D, the fifth flow-channel wall 1E, and, the fourth flow-channel groove 2D. Regarding the second flow channel 11, the fourth flow-channel wall 1D between the third flow-channel groove 2C and the fourth flow-channel groove 2D is discontinuous at the first turnaround area T1, and the third flow-channel groove 2C and the fourth flow-channel groove 2D are connected by the second junction groove J2. The flow channel pattern of the first turnaround area T1 and/or the second turnaround area T2, which are the turnaround areas T in the second half of the second flow channel 11, is different from the flow channel pattern of the third turnaround area T3 and the fourth turnaround area T4, which are the turnaround areas T in the first half of the second flow channel 11.

The first flow-channel groove 2A, the second flow-channel groove 2B, the third flow-channel groove 2C, and the fourth flow-channel groove 2D are arranged in parallel, although they divide into two flow channels in which the direction of fluid flow is reversed.

The ease of fluid flow at turnaround area T of the separator 110 changes where flow-channel grooves 2 are connected in the second half of the first flow channel 10 and the second half of the second flow channel 11. By changing the ease of fluid flow in the first half and second half of the first flow channel 10, and in the first half and second half of the second flow channel 11, it becomes difficult for gas to accumulate in the second half of the first flow channel 10 and the second flow channel 11.

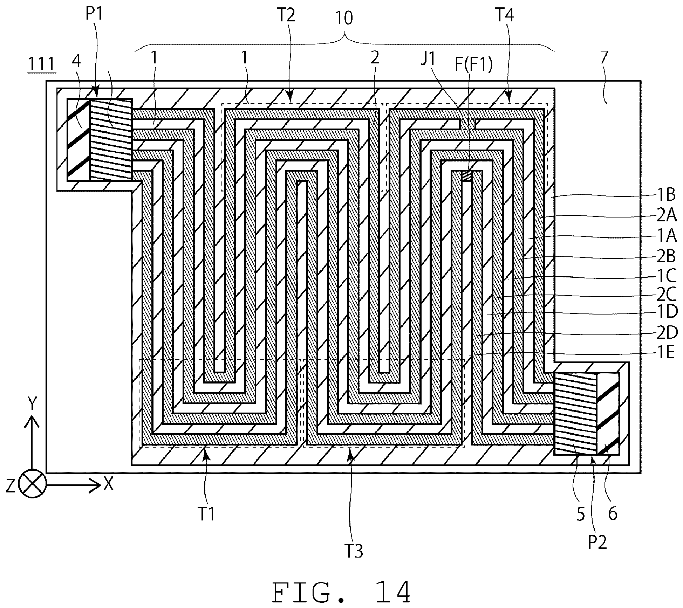

FIG. 14 shows a schematic diagram of separator 111. The separator 111 shown in FIG. 14 is a variation of the separator 100. In separator 111, the fourth flow-channel groove 2D at the fourth turnaround area T4 is blocked by a first blocking wall F1 (blocking wall F). By blocking the flow-channel groove 2, it is possible to change the flow channel pattern. The ease of fluid flow can be changed by blocking, making it difficult for gas to accumulate. The first blocking wall F1 is composed of metal and/or resin, for example.

### (SECOND EMBODIMENT)

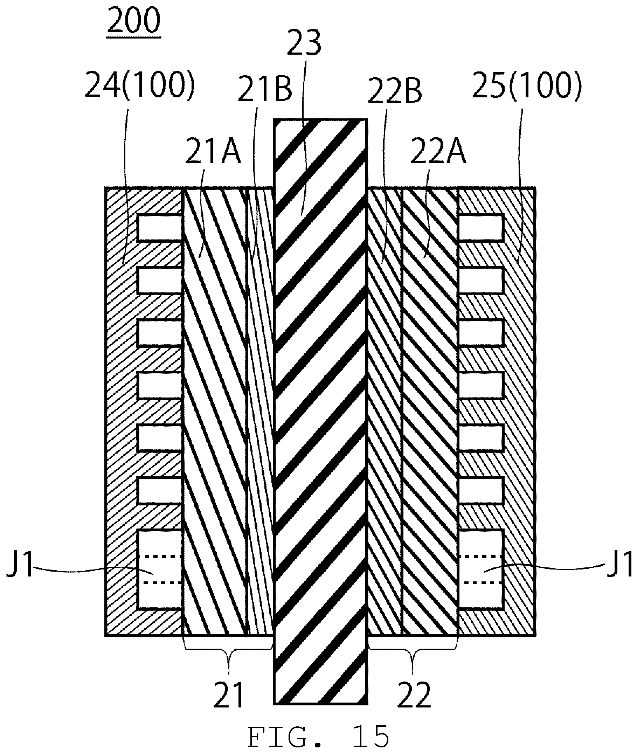

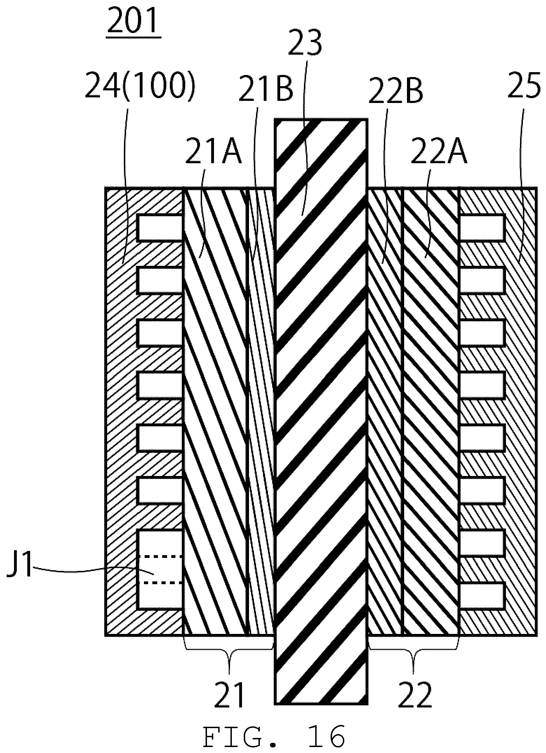

A second embodiment relates to an electrochemical cell. FIGS. 15 and 16 show schematic diagrams of the electrochemical cell 200 according to the second embodiment. The electrochemical cell 200 is used for electrolysis or as a fuel cell.

The electrochemical cell 200 includes an anode 21, a cathode 22, an electrolyte membrane (barrier membrane) 23, a first separator 24 and a second separator 25.

The first electrode (anode) 21 has a porous support 21A on the side of the first separator 24 and a catalyst layer 21B on the side of the electrolyte membrane 23. Suitable materials are used for the support 21A and the catalyst layer 21B of the first electrode 21 depending on the anode reaction of the first electrode 21.

The second electrode (cathode) 22 has a porous support 22A on the side of the second separator 25 and a catalyst layer 22B on the side of the electrolyte membrane 23. Suitable materials are used for the support 22A and the catalyst layer 22B of the second electrode 22 depending on the cathode reaction of the second electrode 22.

The electrolyte membrane 23 is provided between the first electrode 21 and the second electrode 22. The electrolyte membrane 23 includes, for example, a cation exchange membrane or an anion exchange membrane.

The first separator 24 is where the fluid used for the reaction of the first electrode 21 is supplied and the fluid containing the reactants is discharged. The first separator 24 is electrically connected to the first electrode 21.

The second separator 25 is where the fluid used for the reaction of the second electrode 22 is supplied and the fluid containing the reactants is discharged. The second separator 25 is electrically connected to the second electrode 22.

The separator 100 (separators 102 ~111) of the first embodiment is preferably used for the first separator 24 or/and the second separator 25. Either the first separator 24 or the second separator 25 may be a separator without junction grooves J, columnar walls K, and blocking walls F.

The electrochemical cell 200 in FIG. 15 uses the separator 100 of the first embodiment for the first separator 24 and the second separator 25.

The electrochemical cell 200 in FIG. 16 uses the separator 100 of the first embodiment for the first separator 24.

By using the separator 100 of the first embodiment or the second embodiment, gas accumulation within the separator 100 can be reduced, which can reduce deterioration of the electrolyte membrane 23.

### (THIRD EMBODIMENT)

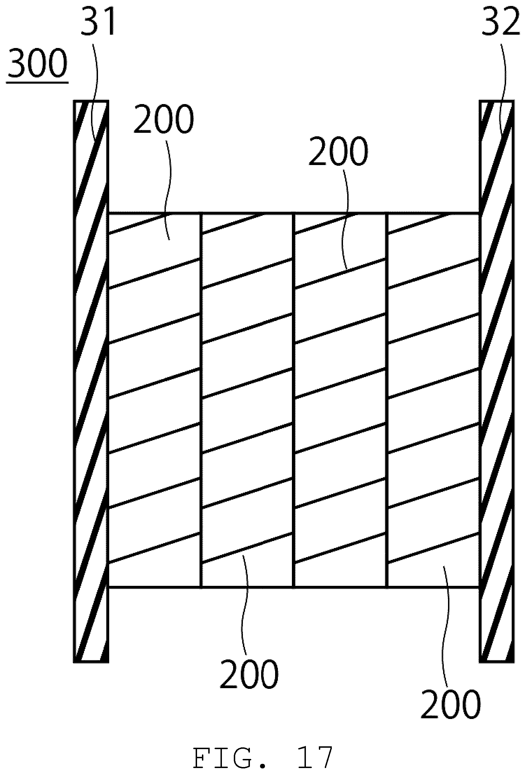

A third embodiment relates to a stack. FIG. 17 is a schematic cross-sectional diagram showing the stack 300 according to the third embodiment. The stack 300 shown in FIG. 17 comprises multiple electrochemical cells 200 of the second embodiment connected in series. Clamping plates 31 and 32 are attached to both ends of the stack 300. The third embodiment may also utilize variation examples of electrochemical cells.

When electrolysis is performed, the amount of H₂, CO and other carbon compounds produced by a single electrochemical cell 200 is small, and when power generation is performed, the amount of electricity generated by a single electrochemical cell 200 is small. Therefore, by constituting the stack 300 where multiple electrochemical cells 200 are connected in series, the amount of product or power generation increases.

### (Fourth Embodiment)

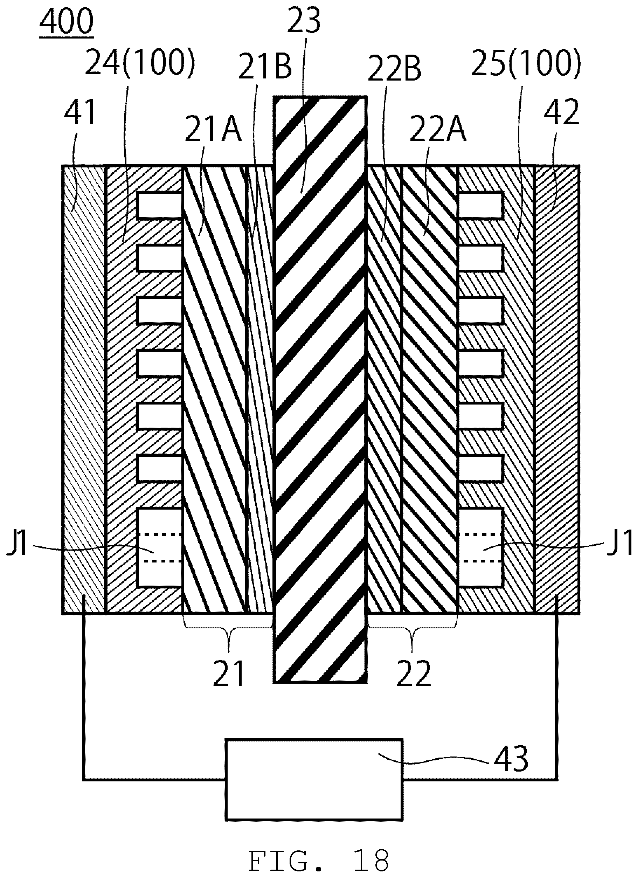

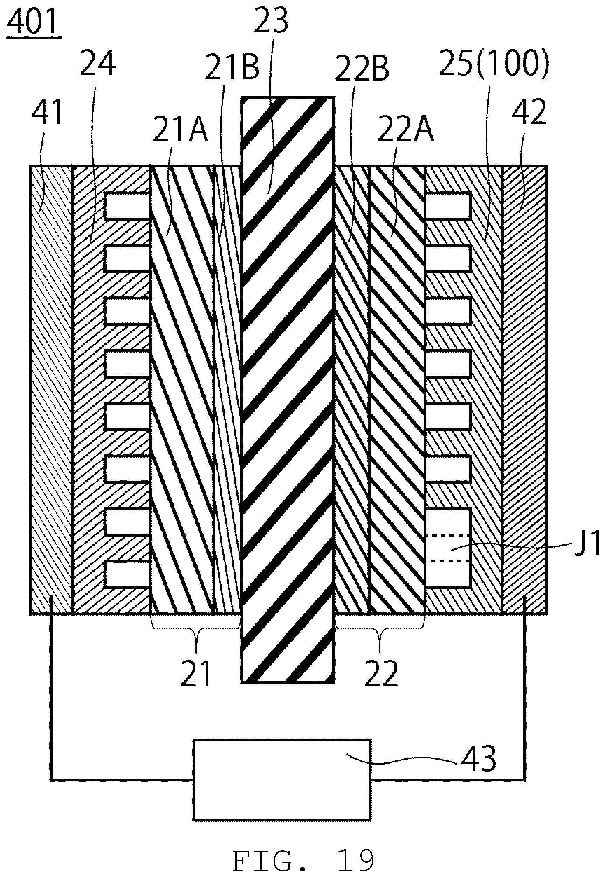

A fourth embodiment relates to an electrolyzer (apparatus) and a fuel cell (apparatus). The electrochemical cells 200, or the stacks 300 using electrochemical cells 200 are used in the electrolyzer and fuel cell. FIG. 18 shows a schematic diagram of the apparatus 400 according to the fourth embodiment. The apparatus 400 uses an electrochemical cell 200. FIG. 19 shows a schematic diagram of the apparatus 401 according to the fourth embodiment. Apparatus 401 also uses electrochemical cells 200. The apparatus 400 and 401 illustrate some configuration examples of actual devices.

The apparatus 400 (401) comprises an electrochemical cell 200, an anode collector plate 41, a cathode collector plate 42, and a power source or load 43.

An anode collector plate 41 is provided on the first separator 24 of the electrochemical cell 200. The first separator 24 is electrically connected to the anode collector plate 41.

A cathode collector plate 42 is provided on the second separator 25 of the electrochemical cell 200. The second separator 25 is electrically connected to the cathode collector plate 42.

Between the anode collector plate 41 and the cathode collector plate 42, a power source or a load 43 is connected.

When apparatus 400 (401) is an electrolyzer device, the power source 43 is connected between the anode collector plate 41 and the cathode collector plate 42.

When apparatus 400 (401) is a fuel cell, the load 43 is connected between the anode collector plate 41 and the cathode collector plate 42. The load 43 may be a power converter, a battery, or the like.

The following are specific examples of the present invention based on the embodiments, but the present invention is not limited to these examples.

### (Example 1)

An electrochemical cell corresponding to FIG. 15 is fabricated by using the separator 100 of FIG. 1 as the first separator 24 and the second separator 25.

### (Example 2)

An electrochemical cell corresponding to FIG. 15 is fabricated by using the separator 101 of FIG. 4 as the first separator 24 and the second separator 25.

### (Example 3)

An electrochemical cell corresponding to FIG. 15 is fabricated by using the separator 103 of FIG. 6 as the first separator 24 and the second separator 25.

### (Comparative Example 1)

An electrochemical cell corresponding to FIG. 15 is fabricated by using a separator without the first junction groove J1 shown in FIG. 1 as the first separator 24 and the second separator 25.

### (Comparative Example 2)

An electrochemical cell corresponding to FIG. 16 is fabricated by using a separator with a blocking wall F also provided in the first turnaround area T1 as shown in FIG. 1, for the first separator 24 and the second separator 25.

Electrolysis operation was performed for CO₂ electrolysis to generate CO under the same conditions, using the electrochemical cells of Examples 1 through 3, and the electrochemical cell of Comparative Example 1. Examples 1 through 3 all exhibited less gas accumulation in the separator compared to Comparative Examples 1 to 2, and were able to reduce cell voltage increases even during long operating times.

Fuel cell operation was performed using methanol as fuel under the same conditions, using the electrochemical cells of Examples 1 through 3, and the electrochemical cell of Comparative Example 1. Examples 1 through 3 all exhibited less gas accumulation in the separator compared to Comparative Examples 1 to 2, and were able to suppress cell voltage decreases even during long operating times.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A separator (100) comprising:
a first flow channel (10) comprising flow-channel grooves (2) and connecting a first location (P1) and a second location (P2), wherein
the first flow channel (10) has a serpentine flow channel shape,
the midpoint in a length direction of the first flow channel is defined as the boundary (G),
a range from the boundary (G) to the first location (P1) side is defined as the first half,
a range from the boundary (G) to the second location (P2) side is defined as the second half,
a turnaround area (T) is included in the first half of the first flow channel (10), and
a turnaround area (T) is included in the second half of the first flow channel (10) that has a flow channel pattern different from that in the first half of the first flow channel (10).

2. The separator (100) according to claim 1, wherein
the flow-channel grooves (2) in the first half of the first flow channel (10) are not connected, and
the flow-channel grooves (2) in the second half of the first flow channel (10) are partially connected.

3. The separator (100) according to claim 1 or 2, wherein
the first flow channel (10) comprises:
a first flow-channel wall (1A);
a second flow-channel wall (1B); and
a first flow-channel groove (2A) provided between the first flow-channel wall (1A) and the second flow-channel wall (1B), and wherein
the first flow-channel wall (1A) in the second half of the first flow channel (10) or the second flow-channel wall (1B) in the second half of the first flow channel (10) is discontinuous.

4. The separator (100) according to any one of claims 1 to 3, wherein
the first flow channel (10) comprises:
a first flow-channel wall (1A);
a second flow-channel wall (1B); and
a first flow-channel groove (2A) provided between the first flow-channel wall (1A) and the second flow-channel wall (1B), and wherein
a length of the first flow-channel wall (1A) in the second half of the first flow channel (10) is shorter than a length of the first flow-channel wall (1B) in the first half of the first flow channel (10).

5. The separator (100) according to any one of claims 1 to 4, wherein
the first flow channel (10) comprises:
a first flow-channel wall (1A);
a second flow-channel wall (1B);
a first flow-channel groove (2A) provided between the first flow-channel wall (1A) and the second flow-channel wall (1B),
a third flow-channel wall (1C); and
a second flow-channel groove (2B) provided between the first flow-channel wall (1A) and the third flow-channel wall (1C), and wherein
the first flow-channel groove (2A) and the second channel groove (2B) are connected at the turnaround area (T) in the second half of the first flow channel (10).

6. The separator (100; 104; 105; 108) according to any one of claims 1 to 5, wherein
a junction portion where all the flow-channel grooves (2) included in the second half of the first flow channel (10) is included in the first flow channel (10).

7. The separator (100; 102; 103) according to any one of claims 1 to 6, wherein
the first flow channel (10) comprises:
a first flow-channel wall (1A);
a second flow-channel wall (1B); and
a first flow-channel groove (2A) provided between the first flow-channel wall (1A) and the second flow-channel wall (1B), and wherein
the first flow-channel wall (1A) at the turnaround area (T) in the second half of the first flow channel (10), and
a columnar wall (K) is provided where the flow-channel wall (1A) is discontinuous.

8. The separator (100; 103) according to any one of claims 1 to 7, wherein
the first flow channel (10) comprises:
a first flow-channel wall (1A);
a second flow-channel wall (1B); and
a first flow-channel groove (2A) provided between the first flow-channel wall (1A) and the second flow-channel wall (1B), and wherein
the first flow-channel wall (1A) at the turnaround area (T) in the second half of the first flow channel (10), and
a columnar wall (K) with island-shape is provided where the flow-channel wall (1) is discontinuous.

9. The separator (100) according to any one of claims 1 to 8, wherein
the first flow channel (10) comprises:
a first flow-channel wall (1A);
a second flow-channel wall (1B); and
a first flow-channel groove (2A) provided between the first flow-channel wall (1A) and the second flow-channel wall (1B), and wherein
the first flow-channel wall (1A) is continuous in the first half of the first flow channel.

10. The separator (100; 109) according to any one of claims 1 to 9, further comprising a second flow channel (11) comprising flow channel grooves (2) and connecting from the second location (P2) to the first location (P1), wherein
the second flow channel (11) has a serpentine flow channel shape,
the first flow channel (10) comprises:
a first flow-channel wall (1A);
a second flow-channel wall (1B); and
the midpoint in the length direction of the first flow channel (10) is defined as the boundary (G) between the first half and the second half,
a range from the boundary (G) of the second flow (11) to the first location side (P1) is defined as the first half of the second flow channel (11),
a range from the boundary (G) of the second flow to the second location (P2) side is defined as the second half of the second flow channel (11),
a turnaround area (T) is included in the first half of the second flow channel (11), and
a turnaround area (T) is included in the second half of the second flow channel (11) that has a flow channel pattern different from that in the first half of the second flow channel (11).

11. The separator (100; 110) according to any one of claims 1, to 10 further comprising a second flow channel (11) comprising flow channel grooves (2) and connecting from the second location (P2) to the first location (P1), wherein
the second flow channel (11) has a serpentine flow channel shape,
the first flow channel (10) comprises:
a first flow-channel wall (1A);
a second flow-channel wall (1B); and
the midpoint in the length direction of the first flow channel (10) is defined as the boundary (G) between the first half and the second half,
a range from the boundary (G) of the second flow to the second location (P2) side is defined as the first half of the second flow channel (11),
a range from the boundary (G) of the second flow to the first location (P1) side is defined as the second half of the second flow channel (11),
a turnaround area (T) is included in the first half of the second flow channel (11), and
a turnaround area (T) is included in the second half of the second flow channel (11) that has a flow channel pattern different from that in the first half of the second flow channel (11).

12. The separator (100; 110) according to claim 11, wherein the first flow channel (10) comprises:
a first flow-channel wall (1A);
a second flow-channel wall (1B);
a first flow-channel groove (2A) provided between the first flow-channel wall (1A) and the second flow-channel wall (1B),
a third flow-channel wall (1C); and
a second flow-channel groove (2B) provided between the second flow-channel wall (1B) and the third flow-channel wall (1C), and
the second flow channel (11) comprises:
the third flow-channel wall (1C);
a fourth flow-channel wall (1D);
a third flow-channel groove (2C) provided between the third flow-channel wall (1C) and the fourth flow-channel wall (1D),
a fifth flow-channel wall (1E); and
a fourth flow-channel groove (1D) provided between the fourth flow-channel wall (1D) and the fifth flow-channel wall (1E) and wherein
the first flow-channel groove (2A) and the second flow-channel groove (2B) are connected,
the third flow-channel groove (2C) and the fourth flow-channel groove (2D) are connected, and
the first flow-channel groove (2A), the second flow-channel groove (2B), the third flow-channel groove (2C), and the fourth flow-channel groove (2D) are arranged in parallel.

13. An electrochemical cell (200) comprising:
a first electrode (21);
a second electrode (22);
an electrolyte membrane (23);
a first separator (24) connected to the first electrode (21); and
a second separator (25) connected to the second electrode (22), wherein
the first separator (24) or/and the second separator (25) is the separator (100) according to any one of claims 1 to 12.

14. A stack (300) comprising;
the electrochemical cell (200) according to claim 13.

15. An apparatus (400; 401) comprising;
the electrochemical cell (300) according to claim 13, wherein
the apparatus is an electrolyzer or a fuel cell.
